# FASCICULE DE BREVET EUROPEEN

(11) **EP 3 374 201 B1**
(45) Date de publication et mention de la délivrance du brevet: **01.09.2021**
(21) Numéro de dépôt: 16806243.8
(22) Date de dépôt: 03.11.2016
(51) Int. Cl.: B60C 1/00, B60C 9/00, C08J 5/04, D07B 1/06

(54) **COMPOSITE À BASE DE COMPOSANT MÉTALLIQUE ET D'UNE MATRICE POLYMÈRE FONCTIONNELLE**
VERBUNDSTOFF MIT EINEM METALLBAUTEIL UND EINER FUNKTIONELLEN POLYMERMATRIX
COMPOSITE COMPRISING A METAL COMPONENT AND A FUNCTIONAL POLYMER MATRIX

(30) Priorité: 13.11.2015 FR 1560848
(43) Date de publication de la demande: 19.09.2018
(73) Titulaire: Compagnie Générale des Etablissements Michelin, 63000 Clermont-Ferrand (FR)
(72) Inventeur: THUILLIEZ, Anne-Lise, 63040 Clermont-Ferrand Cedex 9 (FR); GAVARD-LONCHAY, Odile, 63040 Clermont-Ferrand Cedex 9 (FR)
(74) Mandataire: Gandon-Pain, Sylvie
(86) Numéro de dépôt international: PCT/FR2016/052843
(87) Numéro de publication internationale: WO 2017/081387

(56) Documents cités:
- FR-A1- 2 869 618
- FR-A1- 2 986 456
- US-B2- 8 871 871

## Description

La présente invention concerne le domaine des composites à base de métal et de polymère diénique utilisés comme structure de renforcement ou armature de renforcement dans le pneumatique pour véhicules, notamment à armature de carcasse radiale, telle que les nappes carcasse, les nappes sommets.

Un pneumatique à armature de carcasse radiale, de manière connue comporte une bande de roulement, deux bourrelets inextensibles, deux flancs reliant les bourrelets à la bande de roulement et une ceinture disposée circonférentiellement entre l'armature de carcasse et la bande de roulement, cette ceinture et l'armature de carcasse étant constituées de diverses nappes (ou "couches") de caoutchouc renforcées par des éléments de renforcement filaires ou renforts filaires tels que des câbles ou des monofilaments, par exemple métalliques. Une nappe de renforcement renforcée par des éléments filaires est donc constituée d'une gomme et d'éléments de renforcement qui sont noyés dans la gomme. La gomme est généralement à base d'un élastomère diénique, le caoutchouc naturel, d'une charge renforçante comme le noir de carbone, d'un système de réticulation à base de soufre et d'oxyde de zinc. Les éléments de renforcement sont disposés pratiquement parallèlement les uns aux autres à l'intérieur de la nappe.

Pour remplir efficacement leur fonction de renforcement de ces nappes, soumises comme on le sait à des contraintes très importantes lors du roulage des pneumatiques, les éléments de renforcement filaires métalliques doivent satisfaire à un très grand nombre de critères techniques, parfois contradictoires, tels qu'une haute endurance en fatigue, une résistance élevée à la traction, à l'usure et à la corrosion, une forte adhésion au caoutchouc environnant, et être capables de maintenir ces performances à un niveau très élevé aussi longtemps que possible.

On comprend aisément que l'adhésion entre la gomme et les éléments de renforcement filaires métalliques est donc une propriété clé pour la pérennité de ces performances. Par exemple, le procédé traditionnel pour relier la gomme à de l'acier consiste à revêtir la surface de l'acier avec du laiton (alliage cuivre-zinc), la liaison entre l'acier et la gomme étant assurée par la sulfuration du laiton lors de la vulcanisation ou cuisson de l'élastomère présent dans la gomme. Or, on sait que l'adhésion entre l'acier et la gomme est susceptible de s'affaiblir au cours du temps, du fait de l'évolution progressive des sulfures formés sous l'effet des différentes sollicitations rencontrées, notamment mécaniques et/ou thermiques.

Le document FR 2 869 618 divulgue l'utilisation dans une gomme de calandrage d'un composé de lanthanide en tant que promoteur d'adhésion pour améliorer la performance adhésive de la gomme de calandrage vis-à-vis de renforts métalliques après une étape de sulfuration.

Le document FR 2 986 456 enseigne que l'utilisation dans une armature de renforcement de renforts dont l'âme métallique est recouverte d'une couche de matière polymère permet d'assurer des propriétés adhésives en l'absence d'une étape de sulfuration. La couche de matière polymère comporte un polymère thermoplastique, un poly(p-phénylène éther) et un élastomère diénique porteur de groupes fonctionnels choisis parmi les groupes époxyde, carboxyle, anhydride ou ester d'acide.

Le document US 8,871,871 divulgue l'utilisation de SBR portant un groupe aromatique porteur de groupes hydroxyles vicinaux dans une composition de caoutchouc vulcanisable comprenant à titre de charge de l'oxyde de titane ou de l'alumine et à titre d'activateur de vulcanisation de l'oxyde de zinc. L'utilisation du SBR fonctionnel permet d'améliorer l'interaction entre la partie élastomère de la composition de caoutchouc et la charge.

Il est donc une préoccupation constante des manufacturiers de pneumatique de trouver des composites à base de métal et d'une matrice polymère diénique qui soient des solutions alternatives aux composites déjà existants et qui soient cohésifs sans qu'il soit nécessaire de recourir à une étape de sulfuration.

Au cours de leurs recherches, les Demanderesses ont découvert une solution qui permet de résoudre les problèmes mentionnés pour différents métaux.

Ainsi, un premier objet de l'invention est défini en revendication 1. Il s'agit d' un composite, produit renforcé qui comprend des éléments de renforcement et une gomme de calandrage dans laquelle sont noyés les éléments de renforcement, chaque élément de renforcement consistant en un composant présentant une surface métallique et la gomme de calandrage comprenant une matrice polymère comportant un polymère diénique fonctionnel qui porte au moins un groupe aromatique, lequel groupe aromatique est substitué par au moins deux fonctions hydroxy, deux des fonctions hydroxy étant vicinales, le composant métallique étant un fil ou un câble, la totalité du composant étant en métal, lequel composite est une armature de renforcement pour pneumatique..

L'invention porte également sur un pneumatique comportant le composite conforme à l'invention.

### I. DESCRIPTION DETAILLEE DE L'INVENTION :

Dans la présente description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, sauf indication expresse différente, tous les pourcentages (%) indiqués sont des % en masse.

Par l'expression composite "à base au moins d'un composant et d'une matrice polymère", il faut entendre un composite comportant le composant et la matrice polymère, la matrice polymère ayant pu réagir avec la surface métallique du composant lors des différentes phases de fabrication du composite, en particulier au cours de la réticulation de la matrice polymère ou au cours de la confection du composite avant réticulation de la matrice polymère.

Dans la présente demande, la dénomination « le groupe aromatique » désigne le groupe aromatique qui est substitué par au moins les deux fonctions hydroxy vicinales telles que définies selon l'invention et qui est porté par le polymère diénique fonctionnel utile aux besoins de l'invention selon l'un quelconque de ses modes de réalisation.

Dans la présente demande, la fonction hydroxy fait référence au groupe OH.

Le composite conforme à l'invention est à base au moins d'une matrice polymère et d'un composant qui présente une surface métallique. La matrice polymère représente l'ensemble des polymères (c'est-à-dire chaînes macromoléculaires) présents dans le composite. La surface métallique du composant peut être tout ou partie de la surface totale du composant et est destinée à entrer au contact de la matrice polymère, c'est-à-dire à entrer au contact d'un ou plusieurs polymères de la matrice polymère.

Selon l'invention, le composant est tout ou en partie enrobé de la matrice polymère.

Selon un mode de réalisation ne faisant pas partie de l'invention, seule une partie du composant est métallique, cette partie étant au moins constituée de la surface métallique. Selon l'invention, c'est l'intégralité du composant qui est métallique. Selon l'invention, la totalité du composant est en métal.

Selon une première variante de l'invention, la surface métallique du composant est faite d'un matériau différent du restant du composant. Autrement dit, le composant est fait d'un matériau qui est tout ou en partie recouvert par une couche métallique qui constitue la surface métallique. Le matériau tout ou en partie recouvert par la surface métallique est de nature métallique.

Selon une deuxième variante de l'invention, le composant est fait d'un même matériau, auquel cas le composant est fait d'un métal qui est identique au métal de la surface métallique.

Selon un mode de réalisation avantageux de l'invention, la surface métallique comprend du fer, du cuivre, du zinc, de l'étain, de l'aluminium, du cobalt ou du nickel.

Selon un mode de réalisation particulièrement préférentiel de l'invention, le métal de la surface métallique est un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn) ou le bronze (alliage Cu-Sn).

Dans la présente demande, l'expression « le métal de la surface métallique est le métal ci-après désigné » revient à dire que la surface métallique est en métal ci-après désigné. Par exemple l'expression « le métal de la surface métallique est le fer » écrite plus haut signifie que la surface métallique est en fer. Certains métaux étant sujets à l'oxydation au contact de l'air ambiant, le métal peut être en partie oxydé à l'exception de l'acier inoxydable.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Le composant se présente sous la forme d'un fil ou d'un câble.

Selon l'invention, le composant présente une longueur qui est au moins égale au millimètre. On entend par longueur la plus grande dimension du composant. A titre de composant ayant une longueur qui est au moins égale au millimètre, on peut citer les éléments de renforcement par exemple utilisés dans le pneumatique pour véhicule, comme les éléments filaires (monofilament ou câble) et les éléments non filaires.

Selon l'invention, le composite est une structure renforcée dans laquelle le composant constitue un élément de renforcement et dans laquelle la matrice polymère enrobe l'élément de renforcement.

La matrice polymère a pour caractéristique essentielle de comprendre un polymère diénique fonctionnel qui porte au moins un groupe aromatique, lequel groupe aromatique est substitué par au moins deux fonctions hydroxy, deux des fonctions hydroxy étant vicinales.

Par deux fonctions vicinales, on entend deux fonctions qui sont portées par des carbones du cycle aromatique qui sont adjacents. Autrement dit, une fonction hydroxy est en position ortho par rapport à l'autre fonction hydroxy.

Selon un mode de réalisation particulier de l'invention, le polymère diénique fonctionnel porte plusieurs groupes aromatiques substitués par au moins deux fonctions hydroxy, deux des fonctions hydroxy étant vicinales.

De manière préférentielle, les fonctions hydroxy du groupe aromatique sont au nombre de 2.

Selon l'un quelconque des modes de réalisation de l'invention, les deux fonctions hydroxy vicinales sont de préférence respectivement en position méta et para par rapport à la liaison ou au groupe qui assure le rattachement du groupe aromatique à la chaîne, en particulier principale, du polymère diénique fonctionnel.

La position relative des fonctions hydroxy sur le groupe aromatique, à savoir vicinale, permet de conférer les bonnes propriétés d'adhésion au métal à la composition de caoutchouc.

Selon un mode de réalisation particulièrement préférentiel de l'invention, le groupe aromatique est un groupe dihydroxyaryle de formule (I) dans laquelle le symbole * représente un rattachement direct ou indirect à la chaîne, en particulier principale, du polymère diénique fonctionnel.

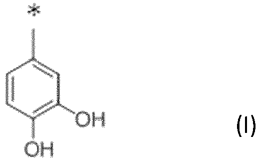

Par polymère diénique, on rappelle que doit être entendu un polymère qui comprend des unités diéniques et qui est généralement issu au moins en partie (i.e. un homopolymère ou un copolymère) de monomères diènes (monomères porteurs de deux doubles liaisons carbone-carbone, conjuguées ou non).

On entend plus particulièrement par polymère diénique :
(a) tout homopolymère d'un monomère diène conjugué ayant de 4 à 12 atomes de carbone;
(b) tout copolymère d'un monomère diène conjugué, en particulier tout copolymère d'un monomère diène conjugué et d'un monomère vinylique tel que l'éthylène, une α-monooléfine, un (méth)acrylonitrile, un (méth)acrylate, un ester vinylique d'acide carboxylique, l'alcool vinylique, un éther vinylique, le monomère diène conjugué ayant de 4 à 12 atomes de carbone;
(c) tout homopolymère d'un monomère diène non conjugué ayant de 5 à 12 atomes de carbone;
(d) tout copolymère d'un monomère diène non conjugué, en particulier tout copolymère d'un monomère diène non conjugué et d'une monooléfine telle que l'éthylène ou une α-monooléfine, le monomère diène non conjugué ayant de 5 à 12 atomes de carbone ;
(e) un mélange des polymères définis en (a) à (d).

A titre de diènes conjugués conviennent notamment le 1,3-butadiène, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre d'a-monooléfine, on peut citer les alcènes et les composés vinylaromatiques, notamment ceux ayant 8 à 20 atomes de carbone, comme par exemple le styrène, l'ortho-, méta-, para-méthylstyrène.

A titre de diènes non conjugués conviennent par exemple ceux ayant de 5 à 12 atomes de carbone, tel que notamment l'hexadiène-1,4, le vinyle norbornène, l'éthylidène norbornène, le norbornadiène et le dicyclopentadiène.

A titre de (méth)acrylonitrile, conviennent l'acrylonitrile et le méthacrylonitrile.

A titre de (méth)acrylates, c'est à dire acrylates ou méthacrylates, on peut citer les esters acryliques dérivés de l'acide acrylique ou de l'acide méthacrylique avec des alcools ayant 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'ethyl-2-hexyle, le méthacrylate de méthyle, le méthacrylate d'éthyle, le méthacrylate de n-butyle, le méthacrylate d'isobutyle, l'acrylate de glycidyle et le méthacrylate de glycidyle.

A titre d'esters vinyliques d'acides carboxyliques, on peut citer par exemple l'acétate de vinyle et le propionate de vinyle, préférentiellement l'acétate de vinyle.

A titre d'éthers vinyliques conviennent par exemple ceux dont le groupement R de la fonction éther OR contient 1 à 6 atomes de carbone.

Dans la présente demande, le polymère diénique est dit fonctionnel puisqu'il porte au moins un groupe aromatique qui est substitué par les deux fonctions hydroxy.

De préférence, le polymère diénique fonctionnel est choisi dans le groupe des polymères constitué par les polybutadiènes, les polyisoprènes, les copolymères du 1,3-butadiène, les copolymères d'isoprène et leurs mélanges. A titre de copolymères de 1,3-butadiène ou d'isoprène, on peut tout particulièrement citer ceux résultant de la copolymérisation du 1,3-butadiène ou d'isoprène avec le styrène ou un (méth)acrylate, notamment l'acrylate ou le méthacrylate de glycidyle. L'homme du métier comprend bien que les polybutadiènes, les polyisoprènes, les copolymères du 1,3-butadiène, les copolymères d'isoprène utiles aux besoins de l'invention en tant que polymère diénique fonctionnel portent un ou plusieurs groupes aromatiques tels que définis selon l'un quelconque des modes de réalisation de l'invention.

Selon l'un quelconque des modes de réalisation de l'invention, les unités diéniques dans le polymère diénique fonctionnel représentent préférentiellement plus de 50%, plus préférentiellement plus de 70% en masse du polymère diénique fonctionnel.

Selon l'un quelconque des modes de réalisation de l'invention, le groupe aromatique porté par le polymère diénique fonctionnel est de préférence un groupe pendant de la chaîne polymère du polymère diénique fonctionnel.

Le groupe aromatique porté par le polymère diénique fonctionnel peut être en extrémité de la chaîne polymère du polymère diénique fonctionnel ou en dehors des extrémités de la chaîne polymère du polymère diénique fonctionnel.

Selon un mode de réalisation particulier de l'invention, le groupe aromatique est exclusivement porté en extrémité de chaîne de la chaîne polymère du polymère diénique fonctionnel, en particulier sur une seule extrémité ou sur chaque extrémité de la chaîne polymère du polymère diénique fonctionnel.

Le polymère diénique fonctionnel peut être synthétisé par les méthodes connues de l'homme du métier. Par exemple, on peut citer à titre non limitatif :
- La modification de polymères diéniques portant au moins un groupe aromatique substitué par au moins deux fonctions vicinales OR hydrolysables par déprotection de ces fonctions comme décrit dans les demandes de brevet WO2009/086490 A2 et WO2011/002994 A2, R représentant une chaîne carbonée ;
- La modification de polymères diéniques époxydés ou la modification de polymères diéniques portant au moins un groupe époxy pendant par un composé nucléophile à la fois porteur du groupe aromatique substitué par au moins deux fonctions vicinales hydroxy et porteur d'une fonction nucléophile comme par exemple décrit dans les demandes de brevet déposées sous les numéros FR14/60290 et FR14/60620 ;
- La modification de polymères diéniques portant en extrémité de chaine un groupe nucléophile par un composé à la fois porteur du groupe aromatique substitué par au moins deux fonctions vicinales hydroxy et porteur d'un groupe électrophile comme décrit par exemple dans la demande de brevet déposée sous le numéro FR15/577707.

La méthode de préparation du polymère diénique fonctionnel est choisie par l'homme du métier judicieusement selon que le groupe aromatique est en extrémité de chaîne du polymère diénique fonctionnel ou en dehors de ses extrémités de chaîne, selon la macrostructure du polymère diénique fonctionnel, notamment la valeur de sa masse molaire moyenne en nombre et de son indice de polydispersité, et selon la microstructure du polymère diénique fonctionnel, notamment des teneurs respectives des liaisons 1,4-cis, 1,4-trans et 1,2 de la partie diénique du polymère diénique fonctionnel.

Le taux de groupe aromatique dans le polymère diénique fonctionnel varie de préférence de 0.01 à 3 milliéquivalent par g (méq/g), plus préférentiellement de 0.15 à 2 méq/g, encore plus préférentiellement de 0.3 à 1.5 méq/g de polymère diénique fonctionnel. Ces plages de taux peuvent s'appliquer à l'un quelconque des modes de réalisation de l'invention.

Selon un mode de réalisation de l'invention, le polymère diénique fonctionnel est un élastomère. Lorsqu'il est élastomère, le polymère diénique fonctionnel présente de préférence une masse molaire moyenne en nombre supérieure à 80000 g/mol.

Selon un autre mode de réalisation de l'invention, le polymère diénique fonctionnel présente une masse molaire moyenne en nombre allant de 1000 à 80000 g/mol, préférentiellement de 1000 à 30000 g/mol, plus préférentiellement de 1000 à 10000 g/mol, encore plus préférentiellement de 1000 à 5000 g/mol. Généralement, ces masses molaires moyennes en nombre, en particulier les plus faibles, peuvent s'avérer trop faibles selon la microstructure du polymère diénique fonctionnel pour lui conférer des propriétés élastomères.

Selon un mode de réalisation particulier de l'invention, le polymère diénique fonctionnel représente au plus 30% en masse de la matrice polymère, de préférence entre 5 et 30% en masse de la matrice polymère.

Selon l'invention, la matrice polymère comprend en outre du polymère diénique fonctionnel un élastomère diénique, Ed, qui représente de préférence plus de 50% en masse de la matrice polymère. On entend par un élastomère diénique un ou plusieurs élastomères diéniques qui se différencient les uns des autres par leur microstructure ou leur macrostructure. Il est entendu que l'élastomère diénique Ed ne répond pas à la définition du polymère diénique fonctionnel. L'élastomère diénique Ed est dépourvu du groupe aromatique portant les deux groupes vicinaux hydroxy. Le mode de réalisation selon lequel l'élastomère diénique Ed est dépourvu du groupe aromatique portant les deux groupes vicinaux hydroxy s'applique à l'un quelconque des modes de réalisation de l'invention.

Par élastomère (ou indistinctement "caoutchouc", les deux termes étant considérés comme synonymes) diénique, doit être compris de manière connue un polymère diénique tel que défini plus haut pour ce qui est de sa microstructure.

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

L'élastomère diénique Ed peut être étoilé, couplé, fonctionnalisé ou non, de manière connue en soi, au moyen d'agents de fonctionnalisation, de couplage ou d'étoilage connus de l'homme du métier.

Selon l'un quelconque des modes de réalisation dans lesquels la matrice polymère contient l'élastomère diénique Ed, l'élastomère diénique Ed est de préférence un élastomère diénique fortement insaturé, de manière plus préférentielle choisi dans le groupe des élastomères fortement insaturés constitué par les polybutadiènes, les polyisoprènes, les copolymères du 1,3-butadiène, les copolymères d'isoprène et leurs mélanges. De manière encore plus préférentielle, l'élastomère diénique Ed est un polyisoprène présentant plus de 90% en masse de liaison 1,4-cis. Mieux l'élastomère diénique est le caoutchouc naturel.

Selon un mode de réalisation de l'invention, l'élastomère diénique Ed et le polymère diénique fonctionnel représentent au moins 90% en masse de la matrice polymère. Selon ce mode de réalisation de l'invention, l'élastomère diénique fonctionnel représente de préférence au plus 30% en masse de la matrice polymère, en particulier entre 5 et 30% en masse de la matrice polymère. Ce mode de réalisation est avantageux notamment pour une application pneumatique pour obtenir une bonne résistance à l'arrachement du composite tout en bénéficiant des propriétés intrinsèques à l'élastomère diénique Ed telle que ses propriétés d'élasticité, de cohésion, de cristallisation sous tension comme dans le cas du caoutchouc naturel. Mieux la matrice polymère consiste en le polymère diénique fonctionnel et l'élastomère diénique Ed.

Le composite conforme à l'invention peut comprendre une charge renforçante répartie dans la matrice polymère.

La charge renforçante est généralement utilisée pour améliorer par exemple la cohésion ou la rigidité de la matrice polymère. La charge renforçante est une charge connue pour ses capacités à renforcer une matrice polymère contenant un polymère diénique, plus particulièrement élastomère. La charge renforçante est typiquement une charge renforçante conventionnellement utilisée dans les compositions de caoutchouc utilisable pour la fabrication de pneumatiques. La charge renforçante est par exemple une charge organique telle que du noir de carbone, une charge inorganique renforçante telle que de la silice à laquelle est associé de manière connue un agent de couplage, ou encore un mélange de ces deux types de charge. La charge renforçante est de préférence un noir de carbone.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous toute autre forme, par exemple comme support de certains des additifs de caoutchouterie utilisés.

Le taux de charge renforçante est choisi par l'homme de l'art selon l'application envisagée du composite et selon la nature de la charge renforçante, notamment de la valeur de sa surface spécifique BET. Par exemple pour une application du composite dans le pneumatique, notamment comme structure de renforcement ou armature de renforcement dans le pneumatique, le taux de charge renforçante est préférentiellement compris dans un domaine allant de 20 parties à 80 parties pour 100 parties de la matrice polymère. En deçà de 20 parties, le renforcement de la matrice polymère peut être insuffisant. Au-delà de 80 parties, il existe un risque d'augmentation de l'hystérèse de la matrice polymère qui peut entraîner un échauffement du composite qui peut conduire à une dégradation des performances du composite.

Le composite conforme à l'invention peut comprendre un système de réticulation de la matrice polymère. Au cours de la fabrication du composite, le système de réticulation est destiné à réagir pour causer la réticulation de la matrice polymère, en général après la mise en contact du composant avec la matrice polymère contenant le système de réticulation et éventuellement la charge renforçante et après sa mise en forme. La réticulation permet généralement d'améliorer les propriétés élastiques de la matrice polymère. Le système de réticulation peut être un système de vulcanisation ou être à base d'un ou plusieurs composés peroxydes, par exemple conventionnellement utilisés dans les compositions de caoutchouc utilisables pour la fabrication de pneumatique.

Le système de vulcanisation proprement dit est à base de soufre (ou d'un agent donneur de soufre) et généralement d'un accélérateur primaire de vulcanisation. A ce système de vulcanisation de base peuvent venir s'ajouter, par exemple incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 parties pour cent parties de la matrice polymère (pcmp), en particulier de 1 à 10 pcmp. L'accélérateur primaire de vulcanisation est utilisé à un taux préférentiel compris entre 0.5 et 10 pcmp, plus préférentiellement compris entre 0.5 et 5 pcmp. On peut utiliser comme accélérateur (primaire ou secondaire) tout composé susceptible d'agir comme accélérateur de vulcanisation des polymères diéniques, en particulier élastomères diéniques, en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de 0.01 à 10 pcmp. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

Le composite conforme à l'invention peut comporter également tout ou partie des additifs usuels habituellement dispersés dans les matrices polymères contenant un polymère diénique, en particulier élastomère. Le choix des additifs est fait par l'homme du métier selon l'application envisagée du composite. Par exemple pour une application du composite dans le pneumatique, notamment comme structure de renforcement ou armature de renforcement dans le pneumatique, peuvent convenir comme additifs des pigments, des agents de protection tels que cires anti-ozone, anti-ozonants chimiques, anti-oxydants, des agents plastifiants ou des agents de mise en œuvre.

La première phase non-productive et la phase productive sont des étapes de travail mécanique, notamment par malaxage, bien connues de l'homme du métier dans la fabrication des compositions de caoutchouc. La première phase non-productive se distingue généralement de la phase productive en ce que le travail mécanique s'effectue à haute température, jusqu'à une température maximale comprise entre 110°C et 190°C, de préférence entre 130°C et 180°C. La phase productive qui suit la phase non-productive, en général après une étape de refroidissement, se définit par un travail mécanique à plus basse température, typiquement inférieure à 110°C, par exemple entre 40°C et 100°C, phase de finition au cours de laquelle est incorporé le système de réticulation.

La charge renforçante, le système de réticulation et les additifs sont répartis généralement dans la matrice polymère par leur incorporation dans la matrice polymère avant la mise en contact du composant avec la matrice polymère. Par exemple, la charge renforçante peut être incorporée à la matrice polymère par un mélangeage mécanique, en particulier un malaxage thermomécanique, éventuellement en présence des additifs précédemment cités. La température de mélangeage est choisie judicieusement par l'homme du métier en fonction de la sensibilité thermique de la matrice polymère, de sa viscosité et de la nature de la charge renforçante. Le système de réticulation est incorporé à la matrice polymère typiquement à une température inférieure à la température à laquelle se produit la réticulation pour permettre sa dispersion dans la matrice polymère et la mise en forme ultérieure du composite avant la réticulation de la matrice polymère. Généralement, le système de réticulation est incorporé à la matrice polymère après l'incorporation de la charge renforçante et des autres additifs dans la matrice polymère.

Selon l'invention, le composite est un produit renforcé qui comprend des éléments de renforcement et une gomme de calandrage dans laquelle sont noyés les éléments de renforcement, chaque élément de renforcement consistant en un composant défini précédemment selon l'un quelconque des modes de réalisation de l'invention et la gomme de calandrage comprenant la matrice polymère. Les éléments de renforcement sont agencés généralement côte à côte selon une direction principale. La gomme de calandrage peut contenir en outre de la matrice polymère, une charge renforçante, un système de réticulation et autres additifs tels que définis précédemment et répartis dans la matrice polymère. Pour une application envisagée dans le pneumatique, le composite constitue une armature de renforcement pour pneumatique.

Le composite conforme à l'invention peut être à l'état cru (avant réticulation de la matrice polymère) ou à l'état cuit (après réticulation de la matrice polymère). Le composite est cuit après mise en contact du composant avec la matrice polymère à laquelle ont été incorporés éventuellement une charge renforçante, un système de réticulation et autres additifs tels que décrits plus haut.

Le composite peut être fabriqué par un procédé qui comprend les étapes suivantes :
- Réaliser deux couches de la matrice polymère dans laquelle sont éventuellement dispersés une charge renforçante, un système de réticulation et autres additifs,
- Prendre le composant en sandwich dans les deux couches en le déposant entre les deux couches,
- Le cas échéant cuire le composite.

Alternativement, le composite peut être fabriqué en déposant le composant sur une portion d'une couche, la couche est alors repliée sur elle-même pour couvrir le composant qui est ainsi pris en sandwich sur toute sa longueur ou une partie de sa longueur.

La réalisation des couches peut se faire par calandrage. Au cours de la cuisson du composite, la matrice polymère est réticulée, notamment par vulcanisation ou par des peroxydes.

Lorsque le composite est utilisé en tant qu'armature de renforcement dans un pneumatique, la cuisson du composite a lieu généralement lors de la cuisson de l'enveloppe du pneumatique.

Le pneumatique, autre objet de l'invention, a pour caractéristique essentielle de comprendre le composite conforme à l'invention. Le pneumatique peut être à l'état cru (avant réticulation de la matrice polymère) ou à l'état cuit (après réticulation de la matrice polymère). Généralement, au cours de la fabrication du pneumatique, le composite est déposé à l'état cru (c'est-à-dire avant réticulation de la matrice polymère) dans la structure du pneumatique avant l'étape de cuisson du pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Préparation des polymères diéniques fonctionnels utiles aux besoins de l'invention :

### Analyse RMN du proton :

L'analyse RMN du proton est utilisée pour déterminer la microstructure des polymères utilisés ou synthétisés. La teneur en le groupe 3,4-dihydroxyaryle dans le polymère diénique fonctionnel est donnée en pourcentage molaire (% mol, c'est-à-dire pour 100 moles d'unité monomère du polymère diénique) ou en milliéquivalent par gramme de polymère diénique fonctionnel (méq/g).

Les spectres sont acquis sur un spectromètre 500 MHz BRUKER équipé d'une sonde " large bande " BBlz-grad 5 mm. L'expérience RMN 1H quantitative, utilise une séquence simple impulsion 30° et un délai de répétition de 3 secondes entre chaque acquisition. Les échantillons sont solubilisés dans le chloroforme deutéré (CDCl₃) ou le méthanol deutéré (MeOD).

### Analyse SEC :

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (lp = Mw/Mn) calculé via un étalonnage dit de MOORE.

Préparation du polymère: Il n'y a pas de traitement particulier de l'échantillon de polymère avant analyse. Celui-ci est simplement solubilisé dans du tétrahydrofuranne (THF) qui contient 1%vol. de diisopropylamine, 1%vol. de triéthylamine et 0.1%vol. d'eau distillée, à une concentration d'environ 1 g/l. Puis la solution est filtrée sur filtre de porosité 0.45µm avant injection.

Analyse SEC: L'appareillage utilisé est un chromatographe « WATERS alliance ». Le solvant d'élution est du tétrahydrofuranne qui contient 1%vol. de diisopropylamine, 1%vol. de triéthylamine. Le débit est de 0.7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée à partir de polystyrènes étalons commerciaux « PSS READY CAL-KIT ».

### II.1.1- par réaction de modification de copolymère d'isoprène et de méthacrylate de glycidyle par un composé nucléophile à la fois porteur du groupe 3,4-dihydroxyaryle et porteur d'une fonction nucléophile, l'acide 3,4-dihydroxyhydrocinnamique :

Au préalable sont préparés respectivement les copolymères d'isoprène et de méthacrylate de glycidyle A, B et C par polymérisation radicalaire selon le protocole suivant :
Dans un réacteur autoclave sont introduits sous un courant d'argon le méthacrylate de glycidyle (MAGLY), l'isoprène, le toluène et l'azobisisobutyronitrile (AIBN). Le mélange réactionnel est chauffé et agité à une température T et pendant une durée t. En fin de polymérisation, le copolymère est précipité dans le méthanol. Le copolymère est analysé par RMN 1H. Pour chacun des copolymères, les quantités de réactifs et de solvant, la température T et la durée t sont indiquées dans le tableau la.

**Tableau la**

| Copolymère | A | B | C |
|---|---|---|---|
| MAGLY | 30.0 g | 17.0 g | 20.0 g |
| isoprène | 129.2 g | 73.2 g | 86.1 g |
| toluène | 100.0 g | 100.0 g | 70.0 g |
| AIBN | 3.67 g | 4.16 g | 3.67 g |
| T | 70°C | 70°C | 70°C |
| t | 960 min | 1200 min | 960 min |

Le tableau 1b indique la microstructure des copolymères A, B et C préparés, exprimée en pourcentage molaire.

**Tableau 1b :**

| Copolymère | A | B | C |
|---|---|---|---|
| MAGLY | 12 | 14 | 12 |
| isoprène | 88 | 86 | 88 |

Le copolymère A ou B ou C est ensuite modifié par réaction avec un composé portant un groupe 3,4-dihydroxyaryle, l'acide 3,4-dihydroxyhydrocinnamique selon le protocole suivant :
Dans un ballon monocol surmonté d'un réfrigérant, le copolymère d'isoprène et de méthacrylate de glycidyle (A ou B ou C) est solubilisé dans du dioxane. L'acide 3,4-dihydroxyhydrocinnamique est ajouté. Puis le milieu réactionnel est agité sous agitation magnétique et chauffé pendant 72h à 120°C. Le milieu réactionnel est ensuite laissé revenir à température ambiante, puis le polymère est coagulé dans l'eau, filtré, puis solubilisé à nouveau dans le dichlorométhane pour être séché sur Na₂SO₄. La solution est enfin évaporée à sec.

Pour chacun des copolymères A et B et C d'isoprène et de méthacrylate de glycidyle, les quantités de réactifs et de solvant utilisées dans la réaction de modification du copolymère par l'acide 3,4-dihydroxyhydrocinnamique sont indiquées dans le tableau 2. Figurent également dans le tableau 2 la microstructure et la macrostructure du copolymère modifié AF et BF et CF respectivement.

**Tableau 2**

| Polymère diénique fonctionnel | AF | BF | CF |
|---|---|---|---|
| Copolymère A | 50.0 g | 0 | 0 |
| Copolymère B | 0 | 42.4 g | 0 |
| Copolymère C | 0 | 0 | 30.3 g |
| Acide 3,4-dihydroxyhydrocinnamique | 16.1 g | 10.9 g | 9.74 g |
| dioxane | 200.0 g | 65.0 g | 100.0 g |
| Mn | 7800 | 4700 | 5000 |
| Mw | 30800 | 9160 | 9500 |
| groupe 3,4-dihydroxyaryle (% mol) | 9.4 | 7.4 | 4.6 |
| (méq/g) | 1.03 | 0.86 | 0.58 |

### II.1.2- par réaction de modification de copolymère de 1,3-butadiène, de styrène et de méthacrylate de glycidyle par l'acide 3,4-dihydroxyhydrocinnamique :

Au préalable sont préparés les copolymères 1,3-butadiène, de styrène et de méthacrylate de glycidyle, respectivement D et E, par polymérisation radicalaire selon le protocole suivant : La polymérisation radicalaire en émulsion est effectuée dans une bouteille capsulée sous agitation modérée et sous atmosphère inerte d'azote.

Dans une bouteille sont introduits le persulfate de potassium K₂S₂O₈ et le chlorure d'hexadécyltriméthylammonium. La bouteille est capsulée puis barbotée à l'azote pendant 10 min. Sont ensuite introduits successivement dans la bouteille les composés et solutions suivants aux taux indiqués dans le tableau 3 (ces solutions ayant été barbotées au préalable pour éliminer toute trace d'oxygène) :
- eau
- solution de HPO₄Na₂ à 100g/L (solution HPO₄Na₂)
- solution de H₂PO₄NH₄ à 100g/L (solution de H₂PO₄NH₄)
- solution à 0.7 mol/L de tert-dodécylmercaptan dans le styrène (solution tert-dodécylmercaptan)
- styrène
- méthacrylate de glycidyle
- 1,3- butadiène

Le milieu réactionnel est mis à agiter et chauffé à 40°C. La polymérisation est stoppée au bout de 60% de conversion par l'ajout de 1mL d'une solution de résorcinol à 100g/L dans l'eau.

Le copolymère est précipité dans un mélange acétone/méthanol (50/50 v/v).

Le copolymère est séché par étuvage sous vide (200 torr) à 50 °C.

Les quantités de réactifs, composés et solutions sont indiquées dans le tableau 3a pour chacun des copolymères D et E.

**Tableau 3a**

| Copolymère | D | E |
|---|---|---|
| K₂S₂O₈ (g) | 0.12 | 0.3 |
| chlorure d'hexadécyltriméthylammonium (g) | 0.5 | 1.25 |
| eau (g) | 90 | 225 |
| solution HPO₄Na₂ (mL) | 4.5 | 11.2 |
| solution de H₂PO₄NH₄(mL) | 1.9 | 4.7 |
| solution tert-dodécylmercaptan (mL) | 0,44 | 1.1 |
| styrène (mL) | 2.1 | 5.2 |
| 1,3-butadiène (mL) | 9.5 | 23.8 |
| MAGLY (mL) | 1.9 | 4.6 |

Le tableau 3b indique la microstructure des copolymères D et E préparés, exprimée en pourcentage molaire.

**Tableau 3b :**

| Copolymère | D | E |
|---|---|---|
| 1,3-butadiène | 78 | 76 |
| MAGLY | 9 | 10 |

Le copolymère D ou E est ensuite modifié par réaction avec un composé portant un groupe 3,4-dihydroxyaryle, l'acide 3,4-dihydroxyhydrocinnamique selon le protocole suivant : Dans un ballon tricol surmonté d'un réfrigérant, le copolymère de 1,3-butadiène, de styrène et de méthacrylate de glycidyle est solubilisé dans du dioxane. L'acide 3,4-dihydroxyhydrocinnamique (10 équivalents par rapport au nombre de moles de fonctions époxydes) est ajouté. Puis le milieu réactionnel est agité sous agitation mécanique et chauffé pendant 72h à 110°C sous atmosphère inerte. Le milieu réactionnel est ensuite laissé revenir à température ambiante sous atmosphère inerte puis le polymère est coagulé dans l'eau et séché par étuvage sous vide (200 torr) à 60 °C.

Les quantités de réactifs et de solvant utilisées dans la réaction de modification des copolymères D et E par l'acide 3,4-dihydroxyhydrocinnamique sont indiquées dans le tableau 4. Figurent également dans le tableau 4 la microstructure et la macrostructure des copolymères modifiés, respectivement DF et EF.

**Tableau 4**

| Polymère diénique fonctionnel | DF | EF |
|---|---|---|
| Copolymère D (g) | 3.06 | 0 |
| Copolymère E (g) | 0 | 3.04 |
| Acide 3,4-dihydroxyhydrocinnamique (g) | 5.06 | 5.02 |
| Dioxane (mL) | 30 | 30 |
| Mn | 29000 | 54500 |
| Mw | 260140 | 634290 |
| groupe 3,4-dihydroxyaryle (% mol) | 8.9 | 5.8 |
| (méq/g) | 1.05 | 0.71 |

### 11.1.3- par réaction de modification de polyisoprène époxydé par un composé nucléophile à la fois porteur du groupe 3,4-dihydroxyaryle et porteur d'une fonction nucléophile, le 11-[éthoxy(hydroxy)phosphoryl]undécyl 3-(3,4-dihydroxyphényl)propanoate :

Pour la réaction de modification est utilisé soit un polyisoprène de synthèse époxydé, soit un caoutchouc naturel époxydé. Le polyisoprène de synthèse époxydé est préparé par époxydation d'un polyisoprène de synthèse:
Protocole pour la préparation du polyisoprène de synthèse : Dans un réacteur de 250 mL, maintenu sous pression d'azote de 2 bars, contenant 105 mL de méthylcyclohexane, sont injectés 10.21 g d'isoprène. 4.5 mL de n-butyllithium à 1.34 mol/L sont alors ajoutés. Le milieu est chauffé à 50°C pendant 45 min pour atteindre un taux de conversion du monomère de 95%. Ce taux est déterminé par pesée d'un extrait séché à 110°C, sous la pression réduite de 200 mmHg. La polymérisation est stoppée par ajout d'un excès de méthanol par rapport au lithium. La solution de polymère est filtrée afin d'éliminer les résidus de lithine présents dans le milieu. Enfin, la solution de polymère est soumise à un traitement anti-oxydant par addition de 0.2 parties pour cent parties de polymère de 4,4'-méthylène-bis-2,6-tert-butylphénol et de 0.2 parties pour cent parties de polymère de N-(l,3-diméthylbutyl)-N'-phényl-p-phénylènediamine, puis le polymère est séché par étuvage sous vide à 60°C pendant 2 jours. Le polyisoprène présente une masse molaire moyenne en masse de 3000 g/mol, un indice de polydispersité (lp) de 1.06, et 88% en mole de liaison 1,4-cis.

Protocole pour l'époxydation du polyisoprène de synthèse : Dans un ballon bicol, le polyisoprène de synthèse est dissous à une concentration massique de 6% dans du méthylcyclohexane. Le mélange est agité et chauffé à 35°C, l'acide formique (1 équivalent par rapport au nombre de moles d'unités isoprène à époxyder) est alors introduit. Le mélange est ensuite chauffé à 47°C, puis l'eau oxygénée (1 équivalent par rapport au nombre de moles d'unités isoprène à époxyder) est introduite goutte à goutte via une ampoule de coulée. Le milieu est ensuite chauffé à 50°C pendant 4h. En fin de réaction, le milieu est neutralisé par introduction d'une solution de soude (1 équivalent par rapport au nombre de moles d'acide formique introduit). Le milieu réactionnel est alors lavé trois fois à l'eau via une ampoule à décanter. La phase organique est ensuite séchée sur MgSO₄ puis filtrée. Le polymère époxydé est récupéré par séchage de la phase organique en étuve à 45°C pendant 48h. Le taux d'époxydation est de 8.4% molaire.

Le polyisoprène de synthèse époxydé, ci-après nommé G, est ensuite modifié par réaction avec un composé portant un groupe 3,4-dihydroxyaryle, le 11-[éthoxy(hydroxy)phosphoryl]undécyl 3-(3,4-dihydroxyphényl)propanoate selon le protocole suivant :
Dans un ballon monocol sont introduits 15 g de G, 9,71 g de 11-[éthoxy(hydroxy)phosphoryl]undécyl 3-(3,4-dihydroxyphényl)propanoate et 170 mL de dioxane. Le milieu réactionnel est mis sous agitation et chauffé à 90°C pendant 20 heures. En fin de réaction, le dioxane est éliminé à l'évaporateur rotatif. La substance obtenue est dissoute dans 200 mL de dichlorométhane, le milieu est mis sous agitation puis une solution de NaHCO₃ dans l'eau à 1M est introduite (1 équivalent par rapport au nombre de moles de 11-[éthoxy(hydroxy)phosphoryl]undécyl 3-(3,4-dihydroxyphényl)propanoate). Le milieu est agité pendant 1h puis une extraction est réalisée via une ampoule à décanter à l'aide d'un mélange eau salée / acétone. La phase organique est ensuite séchée sur MgSO₄ puis filtrée. Le polymère modifié, ci-après nommé GF, est récupéré par séchage de la phase organique en étuve à 45°C pendant 48h. Dans le tableau 5 figurent la microstructure et la macrostructure du polymère modifié, GF.

Le caoutchouc naturel époxydé, ci-après nommé H, est un caoutchouc naturel présentant des groupes époxyde dispersés aléatoirement le long de la chaîne principale du polymère, commercialisé sous l'appellation « Ekoprena », le taux molaire d'époxydation étant de 25%, la viscosité Mooney de 75±15.

Il est ensuite modifié par réaction avec un composé portant un groupe 3,4-dihydroxyaryle, le 11-[éthoxy(hydroxy)phosphoryl]undécyl 3-(3,4-dihydroxyphényl)propanoate selon le protocole suivant :
Dans un ballon monocol sont introduits 20 g de H, 6.04 g de 11-[éthoxy(hydroxy)phosphoryl]undécyl 3-(3,4-dihydroxyphényl)propanoate et 500 mL de toluène. Le milieu réactionnel est mis sous agitation magnétique et chauffé à 90°C pendant 24h. En fin de réaction, le polymère modifié, ci-après nommé HF, est séché par étuvage, puis mis sous agitation dans 1 L d'éthanol pendant 24h. Après filtration, le polymère modifié est séché par étuvage à 60°C pendant 8h.

Dans le tableau 5 figurent la microstructure et la macrostructure du polymère modifié, HF.

**Tableau 5**

| Polymère diénique fonctionnel | GF | HF |
|---|---|---|
| Mn | 2600 | > 150000 |
| Mw | 4500 | > 650000 |
| groupe dihydroxyaryle (% mol) | 4.7 | 4 |
| (méq/g) | 0.54 | 0.48 |

### II.1.4- par réaction de modification de polybutadiène α,ω dihydroxylé par un composé à la fois porteur du groupe 3,4-dihydroxyaryle et porteur d'un groupe électrophile, l'acide 3,4-dihydroxyhydrocinnamique :

Le polybutadiène α,ω dihydroxylé utilisé dans la réaction de modification est le PolyBd R20 LM de Cray Valley et est nommé ci-après J. Il est modifié selon le protocole suivant : Dans un ballon monocol sont introduits 20.0 g de PolyBd R20 LM, 8.05 g (2.6 eq) d'acide 3,4-dihydroxyhydrocinnamique, 0.42 g (0.1 eq) d'acide p-toluènesulfonique et 250 mL de toluène. Le ballon est équipé d'un Dean-Stark, puis le mélange est placé sous agitation à 140°C pendant 48 heures.

En fin de réaction, le toluène est éliminé par évaporation sous vide. Le polybutadiène téléchélique est alors solubilisé dans le dichlorométhane ; deux extractions aqueuses successives permettent d'éliminer l'acide 3,4-dihydroxyhydrocinnamique en excès ainsi que l'acide p-toluènesulfonique. La phase chlorée est séchée sur sulfate de sodium anhydre. Le dichlorométhane est ensuite éliminé par évaporation sous vide. Dans le tableau 6 figurent la microstructure et la macrostructure du polymère modifié, JF.

**Tableau 6**

| Polymère diénique fonctionnel | JF |
|---|---|
| Mn | 3750 |
| Mw | 29100 |
| groupe dihydroxyaryle (% mol) | 1.8 |
| (méq/g) | 0.46 |

### II.2-Préparation des composites :

La qualité de la liaison entre la matrice polymère et le composant est déterminée par un test dans lequel on mesure la force nécessaire pour extraire des tronçons de fils unitaires présentant une surface métallique, de la matrice polymère réticulée. A cette fin, on prépare des composites sous la forme d'éprouvette contenant d'une part des fils unitaires métalliques à titre de composant présentant une surface métallique et d'autre part un mélange élastomère comprenant la matrice polymère réticulée.

Pour cela est préparé au préalable le mélange élastomère comprenant la matrice polymère.

### II.2.1- Préparation des mélanges élastomères :

Les mélanges élastomères préparés se distinguent les uns des autres par la matrice polymère, en raison de la microstructure, de la macrostructure et du taux de polymère diénique fonctionnel utilisé dans la matrice polymère. Pour tous les mélanges élastomères, la matrice polymère consiste en un mélange de caoutchouc naturel et de polymère diénique fonctionnel, le polymère diénique fonctionnel représentant 10, 15 ou 25% en masse de la matrice polymère. Le polymère diénique fonctionnel utilisé dans la matrice polymère, ainsi que son taux sont indiqués dans les tableaux 7 à 9.

Pour préparer le mélange élastomère, on incorpore à la matrice polymère une charge renforçante, un noir de carbone (le N326), et un système de réticulation, un peroxyde (le dicumyl peroxyde) selon le protocole décrit ci-après. Le taux de noir de carbone est de 50 parties pour 100 parties de matrice polymère, celui de peroxyde 5 parties pour 100 parties de matrice polymère.

On introduit dans un mélangeur interne (taux de remplissage final : environ 70% en volume), dont la température initiale de cuve est d'environ 60°C, successivement le caoutchouc naturel, le noir de carbone et le polymère diénique fonctionnel. On conduit alors un travail thermomécanique (phase non-productive) jusqu'à atteindre une température maximale de « tombée » de 150°C. On récupère le mélange ainsi obtenu, on le refroidit puis on incorpore au mélange le système de réticulation sur un mélangeur externe (homo-finisseur) à 30°C, en mélangeant le tout (phase productive).

### II.2.2- Préparation des éprouvettes :

Les mélanges élastomères ainsi préparés sont utilisés pour confectionner un composite sous la forme d'une éprouvette selon le protocole suivant :
On confectionne un bloc de caoutchouc constitué de deux plaques, appliquées l'une sur l'autre avant cuisson. Les deux plaques du bloc consistent en le même mélange élastomère. C'est lors de la confection du bloc que les fils unitaires sont emprisonnés entre les deux plaques à l'état cru, à égale distance et en laissant dépasser de part et d'autre de ces plaques une extrémité du fil unitaire de longueur suffisante pour la traction ultérieure. Le bloc comportant les fils unitaires est alors placé dans un moule adapté aux conditions de tests visées et laissées à l'initiative de l'homme de l'art ; à titre d'exemple, dans le cas présent, la cuisson du bloc est réalisée à 160°C pendant un temps variant de 25 min à 60 min selon la composition sous pression de 5.5 tonnes.

Les fils unitaires sont des fils en acier clair (c'est-à-dire non revêtu) ou en acier recouvert de laiton ou de bronze. Leur diamètre est de 1.75 mm excepté pour les fils bronzés pour lesquels le diamètre est de 1.30 mm ; l'épaisseur du revêtement en laiton de 200 nm à 1 µm, l'épaisseur du revêtement en bronze de 50 nm à 0.1 µm.

Pour chacune des éprouvettes ainsi préparées, les tableaux 7 à 9 indiquent :
- lequel des polymères diéniques fonctionnels AF, BF, CF, DF, EF, GF, HF et JF a été utilisé
- la fraction massique de polymère diénique fonctionnel dans la matrice polymère
- le métal de la surface métallique du fil unitaire.

Chaque éprouvette est référencée par un chiffre arabe, suivi d'une lettre minuscule, par exemple la. A un chiffre arabe correspond un polymère diénique fonctionnel. La lettre minuscule indique la nature du métal de la surface métallique du fil unitaire : a pour le laiton, b pour l'acier et c pour le bronze.

Les éprouvettes ainsi préparées correspondent à des composites conformes à l'invention.

### II.3-Résultats :

### Test d'adhésion :

A l'issue de la cuisson, l'éprouvette ainsi constituée du bloc réticulé et des fils unitaires est mise en place dans les mâchoires d'une machine de traction adaptée pour permettre de tester chaque tronçon isolément, à une vitesse et une température données (par exemple, dans le cas présent, à 100 mm/min et température ambiante).

On caractérise les niveaux d'adhésion en mesurant la force dite d'arrachement pour arracher les tronçons de l'éprouvette.

Les résultats sont exprimés en base 100 par rapport à une éprouvette témoin qui contient des fils unitaires de nature identique à l'éprouvette testée et qui contient un mélange élastomère dont la matrice polymère consiste en du caoutchouc naturel (autrement dit la fraction massique du polymère diénique fonctionnel dans la matrice polymère est de 0% dans l'éprouvette témoin). Excepté l'absence de polymère diénique fonctionnel, l'éprouvette témoin ainsi que le mélange élastomère qui la compose sont préparés à l'identique respectivement des autres éprouvettes et mélanges élastomères.

Une valeur supérieure à celle de l'éprouvette témoin, arbitrairement fixée à 100, indique un résultat amélioré, c'est-à-dire une force d'arrachement supérieure à celle de l'éprouvette témoin. Les valeurs des forces d'arrachement en base 100 résultant des tests effectués sur les éprouvettes sont résumés dans les tableaux 7 à 9, selon le taux de polymère diénique fonctionnel dans la matrice polymère et selon la nature des fils unitaires.

**Tableau 7**

| Eprouvette | 1a et 1b | 2a et 2b | 3a et 3b | 4a et 4b | 5a et 5b | 6a et 6b |
|---|---|---|---|---|---|---|
| Fraction massique 10% | AF | BF | DF | EF | HF | JF |
| laiton | 3360 | 2320 | 2480 | 900 | 220 | 240 |
| acier | 2780 | 2840 | 3480 | 1460 | 1240 | 3160 |

**Tableau 8**

| Eprouvette | 7a et 7b | 8a et 8b | 9a, 9b et 9c | 10a, 10b et 10c |
|---|---|---|---|---|
| Fraction massique 15% | BF | CF | GF | JF |
| laiton | 2100 | 3240 | 980 | 560 |
| acier | 3300 | 2400 | 2700 | 3940 |
| bronze | | | 2360 | 1740 |

**Tableau 9**

| Eprouvette | 11a et 11b | 12a et 12b |
|---|---|---|
| Fraction massique 25% | AF | CF |
| laiton | 2320 | 2920 |
| acier | 2600 | 1920 |

Présentant des valeurs très supérieures à 100 dans le test d'adhésion, les composites conformes à l'invention présentent une résistance à l'arrachement fortement améliorée, aussi bien dans le cas des éléments filaires en acier qu'en laiton et en bronze, c'est-à-dire comprenant du fer, du cuivre, du zinc ou de l'étain.

L'amélioration de la résistance à l'arrachement est observée pour toutes les matrices quelles que soient la microstructure et la macrostructure des polymères diéniques fonctionnels :
- En effet l'amélioration est observée quelle que soit la position du groupe aromatique substitué par au moins 2 fonctions hydroxy vicinales : dans le polymère JF, le groupe aromatique est porté en extrémité de chaîne ; dans les polymères AF, BF, CF, DF, EF, GF et HF, il est en dehors des extrémités de chaîne ;
- L'amélioration est constatée lorsque le polymère diénique fonctionnel est aussi bien un polybutadiène (JF), un copolymère de butadiène (DF et EF), un polyisoprène (GF et HF) ou un copolymère d'isoprène (AF, BF et CF) ;
- L'amélioration est observée pour une large gamme de masses molaires moyennes en nombre du polymère diénique fonctionnel, allant de quelques milliers (AF, BF, CF, GF et JF) à plusieurs dizaines de milliers (DF et EF), voire quelques centaines de milliers (HF).

Il est aussi remarquable de noter que l'amélioration de la performance du composite est observée en l'absence de toute étape de sulfuration généralement nécessaire dans la fabrication des composites à base de polymère diénique et d'acier ou de laiton ou de bronze.

## Revendications

1. Composite, produit renforcé qui comprend des éléments de renforcement et une gomme de calandrage dans laquelle sont noyés les éléments de renforcement, chaque élément de renforcement consistant en un composant présentant une surface métallique et la gomme de calandrage comprenant une matrice polymère comportant un polymère diénique fonctionnel qui porte au moins un groupe aromatique, lequel groupe aromatique est substitué par au moins deux fonctions hydroxy, deux des fonctions hydroxy étant vicinales, le composant métallique étant un fil ou un câble,
la totalité du composant étant en métal
lequel composite est une armature de renforcement pour pneumatique,
la matrice polymère comprenant en outre un élastomère diénique Ed dépourvu du groupe aromatique portant les deux groupes vicinaux hydroxy.

2. Composite selon la revendication 1 dans lequel la surface métallique comprend du fer, du cuivre, du zinc, de l'étain, de l'aluminium, du cobalt ou du nickel.

3. Composite selon l'une quelconque des revendications 1 à 2 dans lequel le métal de la surface métallique est un métal choisi dans le groupe constitué par le fer, le cuivre, le zinc, l'étain, l'aluminium, le cobalt, le nickel et les alliages comportant au moins un de ces métaux.

4. Composite selon l'une quelconque des revendications 1 à 3 dans lequel le métal de la surface métallique est le fer, le cuivre, l'étain, le zinc ou un alliage comportant au moins un de ces métaux.

5. Composite selon l'une quelconque des revendications 1 à 4 dans lequel le métal de la surface métallique est l'acier, le laiton ou le bronze.

6. Composite selon l'une quelconque des revendications 1 à 5 dans lequel le groupe aromatique est un groupe dihydroxyaryle de formule (I), le symbole * représentant un rattachement direct ou indirect à la chaîne du polymère diénique fonctionnel.

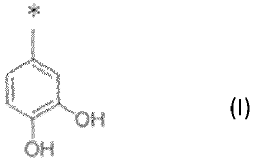

7. Composite selon l'une quelconque des revendications 1 à 6 dans lequel le polymère diénique fonctionnel est choisi dans le groupe des polymères constitué par les polybutadiènes, les polyisoprènes, les copolymères du 1,3-butadiène, les copolymères d'isoprène et leurs mélanges.

8. Composite selon la revendication 1 à 7 dans lequel l'élastomère diénique Ed représente plus de 50% en masse de la matrice polymère.

9. Composite selon l'une quelconque des revendications 1 à 8 dans lequel l'élastomère diénique Ed est un polyisoprène présentant plus de 90% en masse de liaison 1,4-cis, de préférence le caoutchouc naturel.

10. Composite selon l'une quelconque des revendications 1 à 9 dans lequel l'élastomère diénique Ed et le polymère diénique fonctionnel représentent au moins 90% en masse de la matrice polymère.

11. Composite selon l'une quelconque des revendications 1 à 10 dans lequel le polymère diénique fonctionnel représente au plus 30% en masse de la matrice polymère, de préférence entre 5 et 30% en masse de la matrice polymère.

12. Composite selon l'une quelconque des revendications 1 à 11 qui comprend en outre une charge renforçante répartie dans la matrice polymère, de préférence un noir de carbone.

13. Composite selon la revendication 12 dans lequel le taux de charge renforçante est compris dans un domaine allant de 20 parties à 80 parties pour 100 parties de la matrice polymère.

14. Pneumatique comportant le composite défini à l'une quelconque des revendications 1 à 13.

## Patentansprüche

1. Komposit, verstärktes Produkt, das Verstärkungselemente und einen Zwischengummi umfasst, in den die Verstärkungselemente eingebettet sind, wobei jedes Verstärkungselement aus einer Komponente mit einer Metalloberfläche besteht und der Zwischengummi eine Polymermatrix umfasst, die ein funktionelles Dienpolymer aufweist, das mindestens eine aromatische Gruppe trägt, wobei die aromatische Gruppe mit mindestens zwei funktionellen Hydroxygruppen substituiert ist, wobei zwei der Hydroxygruppen vicinal sind, wobei die metallische Komponente ein Draht oder ein Seil ist,
wobei die gesamte Komponente aus Metall besteht,
wobei das Komposit eine Verstärkungsarmierung für Reifen ist,
wobei die Polymermatrix ferner ein Dienelastomer De umfasst, das keine aromatische Gruppe aufweist, die die zwei vicinalen Hydroxygruppen trägt.

2. Komposit nach Anspruch 1, wobei die metallische Oberfläche Eisen, Kupfer, Zink, Zinn, Aluminium, Cobalt oder Nickel umfasst.

3. Komposit nach einem der Ansprüche 1 bis 2, wobei das Metall der metallischen Oberfläche ein Metall ist, das aus der Gruppe bestehend aus Eisen, Kupfer, Zink, Zinn, Aluminium, Cobalt, Nickel und Legierungen, die mindestens eins dieser Metalle umfassen, ausgewählt ist.

4. Komposit nach einem der Ansprüche 1 bis 3, wobei das Metall der metallischen Oberfläche Eisen, Kupfer, Zinn, Zink oder eine Legierung ist, die mindestens eins dieser Metalle umfasst.

5. Komposit nach einem der Ansprüche 1 bis 4, wobei das Metall der metallischen Oberfläche Stahl, Messing oder Bronze ist.

6. Komposit nach einem der Ansprüche 1 bis 5, wobei die aromatische Gruppe eine Dihydroxyarylgruppe mit der Formel (I) ist, wobei das Symbol * eine direkte oder indirekte Verbindung mit der Kette des funktionellen Dienpolymers darstellt.

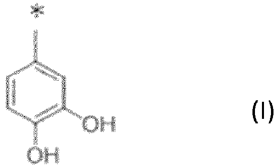

7. Komposit nach einem der Ansprüche 1 bis 6, wobei das funktionelle Dienpolymer aus der Gruppe der Polymere ausgewählt ist, die aus Polybutadienen, Polyisoprenen, 1,3-Butadien-Copolymeren, Isopren-Copolymeren und ihren Mischungen besteht.

8. Komposit nach Anspruch 1 bis 7, wobei das Dienelastomer De mehr als 50 Gewichts-% der Polymermatrix ausmacht.

9. Komposit nach einem der Ansprüche 1 bis 8, wobei das Dienelastomer De ein Polyisopren mit mehr als 90 Gewichts-% 1,4-cis-Bindungen, vorzugsweise Naturkautschuk ist.

10. Komposit nach einem der Ansprüche 1 bis 9, wobei das Dienelastomer De und das funktionelle Dienpolymer mindestens 90 Gewichts-% der Polymermatrix ausmachen.

11. Komposit nach einem der Ansprüche 1 bis 10, wobei das funktionelle Dienpolymer höchstens 30 Gewichts-% der Polymermatrix, vorzugsweise zwischen 5 und 30 Gewichts-% der Polymermatrix ausmacht.

12. Komposit nach einem der Ansprüche 1 bis 11, der ferner einen Verstärkungsfüllstoff umfasst, der in der Polymermatrix verteilt ist, vorzugsweise einen Industrieruß.

13. Komposit nach Anspruch 12, wobei der Anteil des Verstärkungsfüllstoffs in einem Bereich von 20 Teilen bis 80 Teilen auf 100 Teile der Polymermatrix liegt.

14. Reifen, der das Komposit nach einem der Ansprüche 1 bis 13 aufweist.

## Claims

1. Composite, a reinforced product that comprises reinforcing elements and a calendering rubber wherein the reinforcing elements are embedded, each reinforcing element consisting of a component having a metal surface and the calendering rubber comprising a polymer matrix comprising a functional diene polymer that bears at least one aromatic group, which aromatic group is substituted by at least two hydroxyl functions, where two of the hydroxyl functions are vicinal, the component being a thread or a cord, the whole of the component being made of metal, which composite is a reinforcing reinforcer for tyres, the polymer matrix further comprising a diene elastomer Ed devoid of the aromatic group carrying the two vicinal hydroxyl groups.

2. Composite according to Claim 1, wherein the metal surface comprises iron, copper, zinc, tin, aluminium, cobalt or nickel.

3. Composite according to any one of Claims 1 to 2, wherein the metal of the metal surface is a metal selected from the group consisting of iron, copper, zinc, tin, aluminium, cobalt, nickel and alloys comprising at least one of these metals.

4. Composite according to any one of Claims 1 to 3, wherein the metal of the metal surface is iron, copper, tin, zinc or an alloy comprising at least one of these metals.

5. Composite according to any one of Claims 1 to 4, wherein the metal of the metal surface is steel, brass or bronze.

6. Composite according to any one of Claims 1 to 5, wherein the aromatic group is a dihydroxyaryl group having formula (I), where the symbol * represents a direct or indirect attachment to the chain of the functional diene polymer.

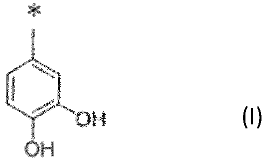

7. Composite according to any one of Claims 1 to 6, wherein the functional diene polymer is selected from the group of polymers constituted by polybutadienes, polyisoprenes, 1,3-butadiene copolymers, isoprene copolymers and mixtures thereof.

8. Composite according to any one of Claims 1 to 7, wherein the diene elastomer Ed represents more than 50% by mass of the polymer matrix.

9. Composite according to any one of Claims 1 to 8, wherein the diene elastomer Ed is a polyisoprene having more than 90% by mass of 1,4-cis bond, preferably natural rubber.

10. Composite according to any one of Claims 1 to 9, wherein the diene elastomer Ed and the functional diene polymer represent at least 90% by mass of the polymer matrix.

11. Composite according to any one of Claims 1 to 10, wherein the functional diene polymer represents at most 30% by mass of the polymer matrix, preferably between 5 and 30% by mass of the polymer matrix.

12. Composite according to any one of Claims 1 to 11, which further comprises a reinforcing filler distributed in the polymer matrix, preferably a carbon black.

13. Composite according to Claim 12, wherein the reinforcing filler content is within a range extending from 20 to 80 parts per hundred parts of the polymer matrix.

14. Tyre that comprises the composite defined in any one of Claims 1 to 13.
